# EUROPÄISCHE PATENTSCHRIFT

(11) **EP 2 633 177 B1**
(45) Veröffentlichungstag und Bekanntmachung des Hinweises auf die Patenterteilung: **04.01.2017**
(21) Anmeldenummer: 11770457.7
(22) Anmeldetag: 18.10.2011
(51) Int. Cl.: F02M 35/024

(54) **FILTERELEMENT FÜR EIN LUFTEINLASSSYSTEM**
FILTER ELEMENT FOR AN AIR INLET SYSTEM
ÉLÉMENT FILTRANT POUR UN SYSTÈME D'ADMISSION D'AIR

(30) Priorität: 26.10.2010 DE 102010049411
(43) Veröffentlichungstag der Anmeldung: 04.09.2013
(73) Patentinhaber: Mann + Hummel GmbH, 71638 Ludwigsburg (DE)
(72) Erfinder: BLOSSEY, Werner, 71726 Benningen (DE); HEIM, Michael, 70825 Korntal-Münchingen (DE); NEEF, Pascal, 71229 Leonberg (DE); SUDERMANN, Arthur, 70825 Münchingen (DE); FRITZSCHING, Torsten, 71665 Vaihingen (DE)
(86) Internationale Anmeldenummer: PCT/EP2011/068147
(87) Internationale Veröffentlichungsnummer: WO 2012/055722

(56) Entgegenhaltungen:
- EP-A2- 0 100 631
- DE-A1- 19 712 679
- JP-A- 56 098 555
- US-A- 3 831 355
- US-A- 4 265 647
- US-A- 5 171 342

## Beschreibung

### Technisches Gebiet

Die Erfindung betrifft ein Filterelement für ein Lufteinlasssystem, das ein Filtermedium, insbesondere in Form eines Faltenbalgs, zum Reinigen von Rohluft, sowie ein Mittelrohr zur Stützung des Filtermediums umfasst. Filterelemente werden zum Reinigen gasförmiger Stoffe oder Stoffgemische, wie z.B. Luft, verwendet und kommen z.B. in der Automobilindustrie in Lufteinlasssystemen von Brennkraftmaschinen zum Einsatz. Das Filtermedium, das z.B. ein Papierfilter in Form eines Faltenbalgs sein kann, hält Verunreinigungen zurück, die sich in der zu reinigenden Luft befinden. Typischerweise handelt es sich bei den Verunreinigungen um Staubpartikel unterschiedlicher Größe und chemischer Zusammensetzung.

### Stand der Technik

Ein derartiges Filterelement ist beispielsweise aus der EP 1 591 653 A1 bekannt geworden. Darin bildet ein als ovale Rippenstruktur ausgebildetes Mittelrohr eine Stütze bzw. Aufnahme für ein Filtermedium, d.h. das Filtermedium ist auf der Mantelfläche der Rippenstruktur angebracht. Das Filterelement ist dabei in einem Luftfiltergehäuse angeordnet, das einen Rohlufteinlass und ein Auslassrohr aufweist.

In der EP 1 591 653 tritt die zu reinigende Luft zunächst durch den Rohlufteinlass in das Luftfiltergehäuse ein, trifft dann auf die rohluftseitige Außenfläche des Filtermediums und durchdringt das Filtermedium sowie die Rippenstruktur. Im Inneren der Rippenstruktur ist ein Hohlraum gebildet, der einenends mittels einer Endscheibe gegenüber dem rohluftseitigen Teil des Luftfiltergehäuses abgedichtet ist und anderenends in das Auslassrohr des Luftfiltergehäuses mündet. Die durch das Filtermedium gereinigte Luft wird über das Auslassrohr aus dem Hohlraum des Mittelrohrs und somit aus dem Luftfiltergehäuse ausgeleitet. Der US 3,831,355 A ist eine Filteranordnung zu entnehmen, welche mehrere im Wesentlichen parallel zueinander verlaufende Faltenbälge aufweist. Jeweils zwei der Faltenbälge sind an ihren einer Einlassöffnung der Filteranordnung zugewandten Enden mittels einer Verbindungsplatte miteinander verbunden. Die Verbindungsplatten liegen an einem Rand des Deckels und des Bodens der Filteranordnung an. Die US 4,265,647 veröffentlicht auch ein Luftfiltergehäuse samt Filtermedium.

Grundsätzlich besteht bei derartigen Filterelementen bzw. Einlassfiltersystemen das Problem, dass sich in einem Anströmbereich des Filterelements sehr leicht eine inhomogene Geschwindigkeitsverteilung des zuströmenden Gases (z.B. Luft) einstellt. Dies ist durch unterschiedliche Einflussfaktoren bedingt.

So hat beispielsweise die genaue Geometrie des Gehäuses im Bereich der rohluftseitigen Zuströmung einen direkten Einfluss auf die Geschwindigkeitsverteilung im unmittelbaren Anströmbereich des Filtermediums. Bei einer ungünstigen Formgebung der Gehäusegeometrie kann es zu einer teilweisen Ablösung der rohluftseitigen Strömung von den Gehäusewänden und damit zu unerwünschten Verwirbelungen kommen, die u.a. zu lokalen Geschwindigkeitsüberhöhungen führen.

Die inhomogene Zuströmung des zu reinigenden Gases bzw. die hohe Strömungsgeschwindigkeit im Anströmbereich kann ggf. eine Beschädigung des Filtermediums zur Folge haben. Dies kann im Extremfall bis hin zu einem Einreißen des Filtermediums (z.B. einzelner Papierfalten eines Faltenbalgs) führen, wodurch dann ungereinigtes Gas an dieser Stelle in die Brennkraftmaschine gelangen und dort Verschmutzungen und ggf. Beschädigungen auslösen kann.

Es ist daher die Aufgabe der Erfindung, mit einfachen Mitteln die Anströmverhältnisse im Bereich des Filterelements zu verbessern und insbesondere eine Beschädigung des Filtermediums durch zuströmendes Gas zu verhindern.

### Offenbarung der Erfindung

Diese Aufgabe wird gelöst durch ein Filterelement der eingangs genannten Art, die dadurch gekennzeichnet ist, dass sie einen Anströmschutz zur Strömungsumlenkung in einem Anströmbereich des Filtermediums aufweist, sowie eine Endscheibe, in die der Anströmschutz und bevorzugt auch das Mittelrohr und das Filtermedium einenends eingebettet sind.

Der Anströmschutz bewirkt eine Strömungsumlenkung im Anströmbereich des Filtermediums und kann gleichzeitig eine gleichmäßigere Geschwindigkeitsverteilung des zuströmenden Gases bewirken. Dies hat zur Folge, dass lokale Geschwindigkeitsüberhöhungen ausbleiben und somit zum einen Beschädigungen des Filtermediums vermieden werden (Schutzfunktion des Anströmschutzes) und zum anderen durch die Homogenisierung der Geschwindigkeitsverteilung die Leistungsfähigkeit des Filtermediums verbessert wird (Leistungsverbesserungsfunktion des Anströmschutzes). Der Anströmschutz erstreckt sich zumindest über den Anströmbereich des erfindungsgemäßen Filterelements, also in dem Bereich, in dem das zuströmende Gas auf seinem Weg durch das Lufteinlasssystem zuerst mit hoher Geschwindigkeit auf das Filterelement bzw. das Filtermedium trifft.

Zur Befestigung des Anströmschutzes an das erfindungsgemäße Filterelement ist der Anströmschutz einenends in die Endscheibe eingebettet, d.h. ein endseitiger Teil des Anströmschutzes ist vom Material der Endscheibe umgeben, insbesondere umspritzt bzw. umschäumt. Durch die Einbettung bzw. das Umspritzen des Anströmschutzes ggf. gemeinsam mit dem Mittelrohr und dem Filtermedium in die Endscheibe sind diese Elemente fest miteinander verbunden, so dass der Anströmschutz einen festen Bestandteil des erfindungsgemäßen Filterelements bildet. Die Endscheibe, welche typischerweise aus einem spritzfähigen oder schäumbaren Material, wie z.B. einem Kunststoff oder einem Schaum hergestellt ist, ermöglicht eine dichtende Anordnung des erfindungsgemäßen Filterelements im Gehäuse eines Lufteinlasssystems, d.h. die Endscheibe kann beim Einbau des Filterelements in ein Lufteinlasssystem als Dichtung zwischen rohluftseitigem und reinluftseitigem Teil des Lufteinlasssystems wirken. Ferner ist durch das Einbetten bzw. Umspritzen des Anströmschutzes, des Mittelrohrs und des Filtermediums ein Toleranzausgleich beim genauen Positionieren des Anströmschutzes möglich, d.h. die relative Position aller vorgenannten Elemente kann vor dem Einbetten in die Endscheibe geringfügig variiert werden, wodurch eine Anpassung an eine individuelle Einbausituation des Filterelements möglich ist.

Das Mittelrohr, welches als Stütze bzw. zur (mantelseitigen) Aufnahme für das Filtermedium dient, sowie das Filtermedium selbst können ebenfalls endseitig in die Endscheibe eingebettet sein. Das Mittelrohr ist an seinen Mantelflächen luftdurchlässig, um die durch das Filtermedium hindurchgetretene und somit gereinigte Luft in das Innere des Mittelrohres strömen zu lassen. Dies ist z.B. durch eine perforierte Mantelfläche des Mittelrohres möglich, oder dadurch, dass das Mittelrohr als Rippenstruktur ausgebildet ist. Der Anströmschutz ist in der Regel aus Kunststoff gefertigt. Der Aufbau des erfindungsgemäßen Filterelements ist besonders einfach und weist nur eine geringe Anzahl an Elementen auf.

Bei einer bevorzugten Ausführungsform des Filterelements ist der Anströmschutz einenends über eine Steckverbindung an dem Mittelrohr befestigt. Steckverbindungen sind einfach herzustellende Verbindungen, die eine ausreichend stabile Lagerung des Anströmschutzes an dem Mittelrohr ermöglichen. Als eine einfache Steckverbindung können z.B. Schnapphaken bzw. Klipsverbindungen eingesetzt werden. Bei der Herstellung des Filterelements kann der Anströmschutz durch die Steckverbindung (Schnapphaken bzw. Klipse) zunächst an dem Mittelrohr gehalten werden, jedoch noch innerhalb eines Toleranzbereichs gegenüber dem Mittelrohr verschiebbar bleiben. Erst durch das Einbetten (z.B. Umspritzen) der auf diese Weise miteinander verbundenen Elemente (Anströmschutz und Mittelrohr bzw. Filtermedium) in die Endscheibe werden diese Elemente dann abschließend in ihrer relativen Lage zueinander fixiert. Alternativ kann der Anströmschutz auch durch eine andere Verbindungsart, insbesondere eine Schweißverbindung am Mittelrohr befestigt sein.

Bei einer anderen bevorzugten Ausführungsform des Filterelements ist der Anströmschutz anderenends an einer weiteren Endscheibe des Filterelements befestigt. Dadurch wird eine besonders stabile mechanische Lagerung des Anströmschutzes an das Filterelement bewirkt. Insbesondere wird durch eine derartige Ausgestaltung des Filterelements der Gefahr entgegengewirkt, dass der Anströmschutz durch die anströmende Luft in Schwingungen versetzt wird. Dies hätte ggf. eine akustische Beeinträchtigung während des Betriebs des Filterelements zur Folge.

Bei einer Weiterbildung der vorhergehenden Ausführungsform ist der Anströmschutz über eine Steckverbindung an der weiteren Endscheibe befestigt. Eine Steckverbindung ist in der Regel einfach und schnell herstellbar, wobei die Steckverbindung insbesondere ohne Zuhilfenahme von Werkzeugen hergestellt werden kann.

Bei einer weiteren Weiterbildung umfasst die Steckverbindung einen Gegenhalter, der einenends in die weitere Endscheibe eingebettet ist. Der Gegenhalter kann anderenends aus der weiteren Endscheibe herausragen und in dem herausragenden Teilbereich des Gegenhalters können z.B. Öffnungen zur Aufnahme von an dem Anströmschutz gebildeten Zapfen vorgesehen sein, um die Steckverbindung zu realisieren.

Bei einer anderen Weiterbildung der vorhergehenden Ausführungsformen ist der Anströmschutz anderenends direkt in die weitere Endscheibe eingebettet, d.h. ein Teil des Anströmschutzes ist beispielsweise vom Material der Endscheibe umgeben (umspritzt und/oder umschäumt). Durch die Einbettung werden die jeweiligen Elemente fest miteinander verbunden, was dem Filterelement eine hohe Stabilität verleiht.

In einer Ausführungsform weist der Anströmschutz auf der dem Filterelement abgewandten Seite eine oder mehrere Leitrippen insbesondere zur Strömungsführung im Anströmbereich auf. Die Leitrippen liegen insbesondere in Ebenen, die im Wesentlichen parallel zu den Endscheiben des Filterelements liegen, können jedoch je nach Anströmbedingung in Richtung des Filterelements fächerförmig angeordnet sein, um eine gleichmäßigere Anströmung des Filterelements zu ermöglichen. Die Öffnung der Fächerform kann dabei entweder dem Filterelement zugewandt oder von diesem abgewandt sein.

Es versteht sich, dass der Anströmschutz ggf. anderenends nicht an dem Filterelement, sondern am Gehäuse fixiert werden kann. In diesem Fall weist der Anströmschutz ein freies Ende zur Befestigung am Gehäuse auf, an dem z.B. Rastelemente oder dergleichen zur Fixierung vorgesehen sein können.

Bevorzugt ist ein Filterelement, das dadurch gekennzeichnet ist, dass die Endscheibe bzw. die Endscheiben aus PUR gebildet sind. PUR (Polyurethan) hat sich als Material zur Abdichtung von Filterelementen oder dergleichen in der Praxis bewährt.

Bevorzugt ist auch ein Filterelement, bei welchem der Anströmschutz, zumindest in dem Anströmbereich, luftundurchlässig ausgebildet ist. Durch die Luftundurchlässigkeit des Anströmschutzes ist ein Hindurchtreten von Rohluft durch den Anströmschutz und somit eine Beschädigung des in Strömungsrichtung dahinter befindlichen Filtermediums ausgeschlossen. Des Weiteren wird die Strömung beim Auftreffen auf ein luftundurchlässiges Hindernis gezwungen, um das Hindernis herumzuströmen, wodurch eine gleichmäßigere Geschwindigkeitsverteilung im Anströmbereich des Filterelements erzielt werden kann. Es versteht sich, dass der Anströmschutz ggf. außerhalb des Anströmbereichs ggf. Perforationen aufweisen kann, um die Geschwindigkeitsverteilung günstig zu beeinflussen.

Bevorzugt ist ein Filterelement, bei dem sich der Anströmschutz über die gesamte Länge des Filtermediums erstreckt. Dadurch werden die Schutzfunktion und die Leistungsverbesserungsfunktion des Anströmschutzes über die gesamte Länge des Filtermediums erzielt. Die gesamte Länge des Filtermediums ist die Länge, die aktiv am Filtervorgang teilnimmt (und entspricht z.B. die gesamte Höhe eines zylindrischen Filtermediums). Erstreckt sich der Anströmschutz über die gesamte Länge des Filterelements, kann dieser mit seinem dem eingebetteten Ende gegenüberliegenden Ende an der Endscheibe des Filterelements oder ggf. am Gehäuse des Lufteinlasssystems befestigt und so zusätzlich stabilisiert werden.

Bevorzugt ist darüber hinaus ein Filterelement, bei welchem der Anströmschutz eine an die Form des Filtermediums angepasste Geometrie aufweist. Der Anströmschutz weist hierbei typischerweise eine Krümmung auf, die im Wesentlichen der Krümmung des darunter liegenden Filtermediums entspricht. Dadurch lässt sich eine besonders effektive Strömungsumlenkung im Anströmbereich des Lufteinlasssystems erzielen. Lokale Geschwindigkeitsüberhöhungen werden so besonders effektiv vermieden.

Schließlich ist ein Filterelement bevorzugt, bei welchem der Anströmschutz zumindest in einem Teilbereich vom Filtermedium beabstandet ist. Typischerweise ist der Anströmschutz außer in den Bereichen, in denen dieser an das Filterelement bzw. Gehäuse angebunden ist, vom Filtermedium beabstandet, da durch die Beabstandung des Anströmschutzes vom Filtermedium Rohluft auch in den Bereich unmittelbar zwischen Anströmschutz und Filtermedium gelangen kann, so dass dieser Bereich aktiv an der Reinigung der Rohluft teilnehmen kann. Dies unterstützt die Leistungsverbesserungsfunktion des Anströmschutzes. Bei Abständen zwischen Filtermedium und Anströmschutz, die typischerweise im mm-Bereich liegen (z.B. bei 5 mm), ist die Leistungsverbesserungsfunktion besonders hoch und die Schutzfunktion des Anströmschutzes wird nicht durch zu große Abstände beeinträchtigt.

In einer alternativen Ausführungsform umfasst das Filterelement eine insbesondere im Spritzgussverfahren hergestellte Endscheibe aus insbesondere thermoplastischem Kunststoff, wobei der Anströmschutz mit der Endscheibe verschweißt ist oder mit dieser durch eine Steckverbindung verbunden ist.

In den Rahmen der Erfindung fällt des Weiteren ein Lufteinlasssystem umfassend: ein Gehäuse mit einem Rohlufteinlass und einem Reinluftauslass, wobei in dem Gehäuse zwischen dem Rohlufteinlass und dem Reinluftauslass ein Filterelement angeordnet ist, das wie oben beschrieben ausgebildet ist. Ein derartiges Lufteinlasssystem kann in vorteilhafter Weise besonders effektiv betrieben werden, da das Filterelement durch den Anströmschutz geschützt ist und das Filtermedium somit nicht im Anströmbereich, in dem die höchsten Geschwindigkeiten auftreten, beschädigt werden kann. Darüber hinaus bewirkt der Anströmschutz eine Erhöhung der Leistungsfähigkeit des Lufteinlasssystems durch eine homogenere Anströmung des Filterelements im Gehäuse des Lufteinlasssystems. Akustische Beeinträchtigungen durch einen vibrierenden Anströmschutz können ebenfalls vermieden bzw. stark reduziert werden.

Ein bevorzugtes Lufteinlasssystem ist dadurch gekennzeichnet, dass der Anströmschutz anderenends an dem Gehäuse des Lufteinlasssystems gelagert bzw. dort fixiert ist. Durch die zusätzliche Fixierung des Anströmschutzes an dem Gehäuse des Lufteinlasssystems wird eine höhere mechanische Stabilität als bei der einseitigen Anbindung des Anströmschutzes erreicht, die auch zur Vermeidung von akustischen Effekten beiträgt. Es versteht sich, dass der Anströmschutz anderenends am Gehäuse und/oder an dem Filterelement fixiert werden kann.

Schließlich ist eine weitere Ausführungsform des Lufteinlasssystems bevorzugt, bei dem sich der Anströmschutz zumindest teilweise über einen Anströmbereich des Filterelements in dem Gehäusebereich erstreckt, in dem das Filterelement angeordnet ist. Dadurch ist ein besonders effektiver Betrieb des Lufteinlasssystems möglich.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Kurze Beschreibung der Zeichnungen

Ausführungsbeispiele sind in der schematischen Zeichnung dargestellt und werden in der nachfolgenden Beschreibung erläutert. Es zeigen:
Fig. 1 ein Lufteinlasssystem mit einem erfindungsgemäßen Filterelement in perspektivischer Ansicht,
Fig. 2 ein erfindungsgemäßes Filterelement mit einem Anströmschutz in perspektivischer Ansicht,
Fig. 3a den Anströmschutz gemäß Fig. 2 in Alleinstellung,
Fig. 3b einen Ausschnitt des Anströmschutzes aus Fig. 3a in Detailansicht,
Fig. 4a einen Ausschnitt eines schematischen Querschnitts durch eine Steckverbindung des Filterelements,
Fig. 4b eine weitere Steckverbindung des Filterelements,
Fig. 4c eine alternative Ausführungsform der weiteren Steckverbindung, und
Fig. 5 eine Ausführungsform eines Anströmschutzes mit Leitrippen.

### Ausführungsform(en) der Erfindung

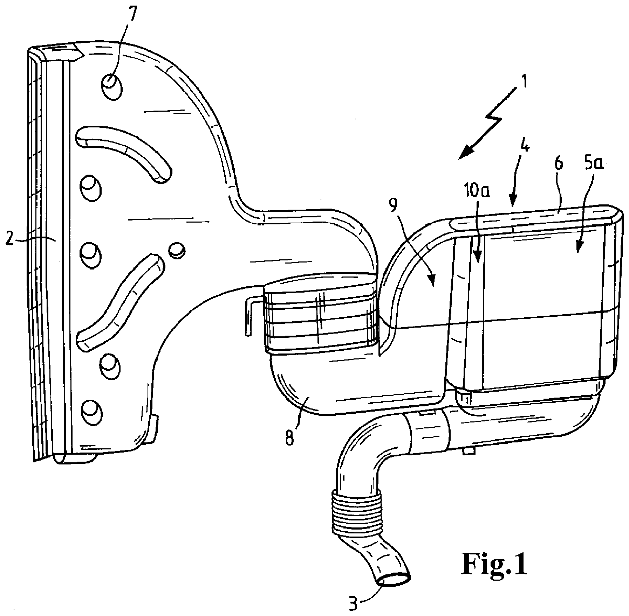

In Fig. 1 ist ein Lufteinlasssystem 1 dargestellt, das einen Rohlufteinlass 2 und einen Reinluftauslass 3 aufweist, wobei zwischen dem Rohlufteinlass 2 und dem Reinluftauslass 3 in einem Gehäusebereich 4 ein Filterelement 5a angeordnet bzw. eingesetzt ist.

Die zu reinigende Luft (Rohluft) durchströmt auf ihrem Weg durch das Lufteinlasssystem 1 zunächst den Rohlufteinlass 2, der über Durchbrüche 7 beispielsweise an einer Karosserie eines Kraftfahrzeugs befestigt werden kann. Dann strömt die Luft durch einen Adapter 8 in einen Anströmbereich 9 des Filterelements 5a ein, wird dem Filterelement 5a zugeführt und tritt nach der Filterung über den Reinluftauslass 3 aus dem Lufteinlasssystem 1 aus und gelangt dann beispielsweise in eine nicht dargestellte Brennkraftmaschine.

Unmittelbar vor der Zuführung der Rohluft zum Filterelement 5a trifft die Rohluft im Anströmbereich 9 auf einen Anströmschutz 10a, der die zuströmende Rohluft umlenkt und gleichmäßig in dem Gehäusebereich 4 verteilt, in dem das Filterelement 5a angeordnet ist, so dass die Geschwindigkeitsverteilung der Rohluft homogenisiert wird und lokale Geschwindigkeitsüberhöhungen verringert werden. Dadurch kann eine Beschädigung des Filterelements 5a vermieden und eine effektivere Arbeitsweise des Filterelements 5a sichergestellt werden.

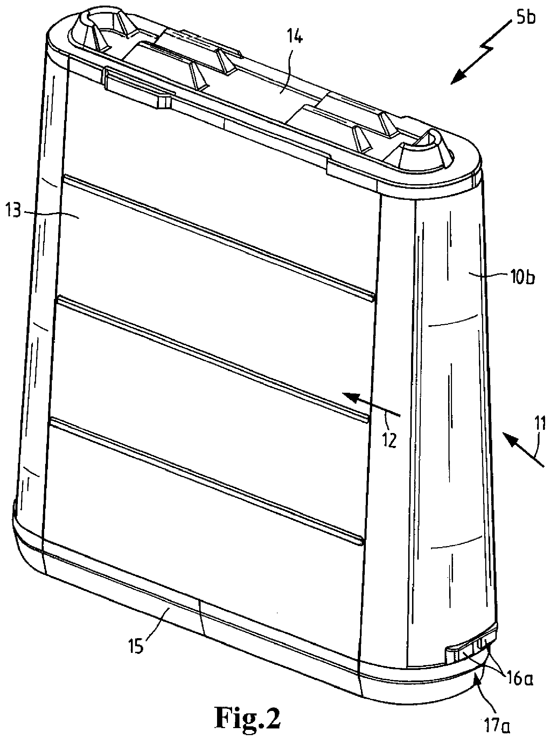

In Fig. 2 ist ein Filterelement 5b mit einem Anströmschutz 10b dargestellt, das z.B. in das Lufteinlasssystem aus Fig. 1 eingesetzt werden kann. Im eingebauten Zustand wird das Filterelement 5b im Wesentlichen aus einer Richtung gemäß Pfeil 11 mit Rohluft angeströmt, so dass die Rohluft zunächst auf den Anströmschutz 10b trifft und dann zu den beiden gegenüberliegenden Seiten des Filterelements 5b hin umgelenkt wird (vgl. Pfeil 12).

Das Filterelement 5b weist ein ringförmiges Filtermedium 13 in Form eines Faltenbalgs auf, das um ein in Fig. 2 nicht dargestelltes, zylindrisches Mittelrohr herumgeführt ist, wobei das Mittelrohr als (mantelseitige) Aufnahme und Stütze für das Filtermedium 13 dient.

Das Filterelement 5b weist ferner an seiner (in der Zeichnung) oberen Seite eine erste Endscheibe 14 aus PUR auf, in die der Anströmschutz 10b, das Mittelrohr und das Filtermedium 13 an ihrem einen Ende eingebettet sind. An der (in der Zeichnung) unteren Seite des Filterelements 5b ist eine weitere, zweite Endscheibe 15 aus PUR gebildet, in die das Mittelrohr und das Filtermedium 13 an ihrem anderen Ende eingebettet sind. Der Anströmschutz 10b ist jedoch am unteren Ende des Filterelements 5b nicht in die weitere Endscheibe 15 eingebettet, sondern weist zwei Zapfen 16a einer weiteren Steckverbindung 17a auf. Beim Einbau des Filterelements 5b in ein Lufteinlasssystem gem. Fig. 1 werden die Zapfen 16a in eine nicht dargestellte Gegenaufnahme am Gehäuse 6 des Lufteinlasssystems 1 gesteckt, wodurch der Anströmschutz 10b beidseitig fixiert wird.

Die erste Endscheibe 14 ist luftundurchlässig ausgebildet und schließt das obere Ende des Filterelements 5b im Gehäuse 6 (vgl. Fig. 1) dichtend ab. Die untere, zweite Endscheibe 15 schließt den Innenraum des Filterelements 5b ebenfalls dichtend gegenüber der Rohseite ab, weist aber eine in Fig. 2 nicht erkennbare Auslassöffnung auf, in die der Reinluftauslass 3 mündet. Während des Betriebs des Filterelements 5b tritt die Rohluft zunächst durch das Filtermedium 13 hindurch und anschließend in das luftdurchlässige Mittelrohr ein, welches mantelseitig eine Rippenstruktur aufweist. Die so erhaltene Reinluft wir dann aus dem Inneren des Mittelrohrs durch die Auslassöffnung in der unteren Endscheibe 15 zum Reinluftauslass 3 transportiert.

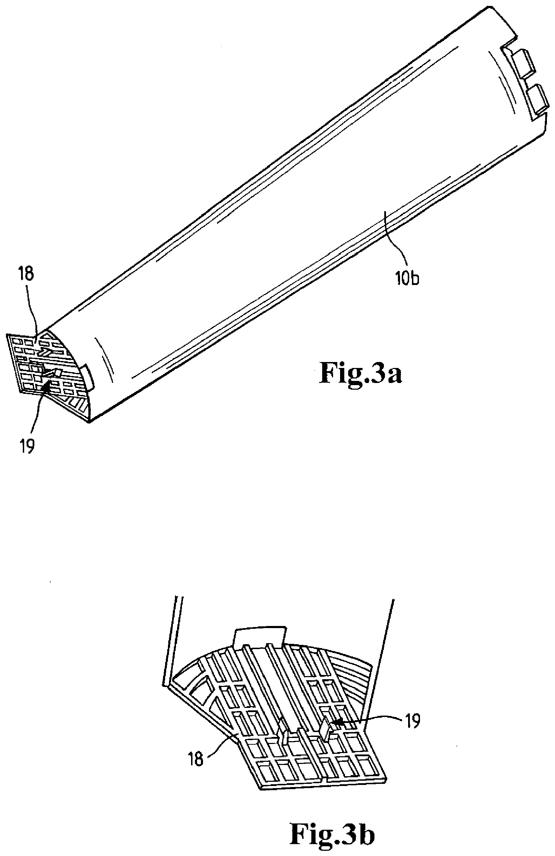

In Fig. 3a ist der Anströmschutz 10b aus Fig. 2 ohne die weiteren Elemente des Filterelements 5b dargestellt. Einenends weist der Anströmschutz 10b ein Gitter 18 mit Rasthaken 19 einer Steckverbindung auf. Das Gitter 18 des Anströmschutzes 10b bzw. Rasthaken 19 werden mit einer in Fig. 3a nicht dargestellten, am Mittelrohr ausgebildeten Rastaufnahme verrastet und anschließend mit PUR umspritzt, wodurch die erste Endscheibe 14 gebildet wird, in die der Anströmschutz 10b, das Mittelrohr und das Filtermedium 13 eingebettet sind. Durch die zusätzliche Verrastung wird ein besonders sicherer und fester Halt des Anströmschutzes 10b an das Filterelement 5b bewirkt.

Fig. 3b zeigt das Gitter 18 aus Fig. 3a in einer Detailansicht, wodurch die Rasthaken der Steckverbindung 19 deutlicher erkennbar sind.

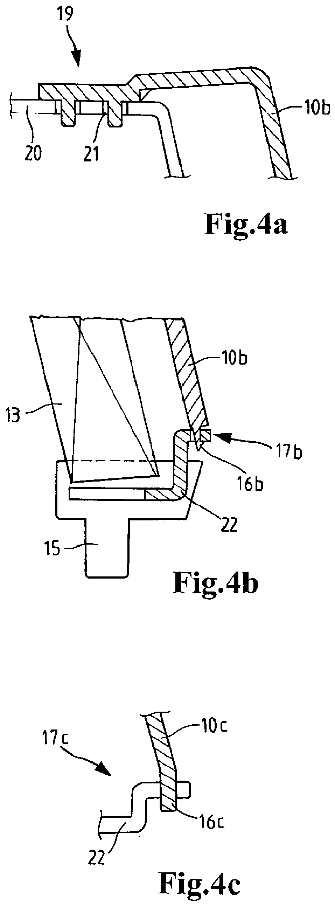

In Fig. 4a ist schematisch ein Querschnitt durch die Steckverbindung 19 zwischen dem oberen Ende des Mittelrohrs 20 und dem Anströmschutz 10b gezeigt. Durch das Einrasten des Anströmschutzes 10b am Mittelrohr 20 kann eine Zentrierung erfolgen, die nicht zwingend die Lage des Anströmschutzes 10b zum Mittelrohr 20 exakt festlegt. Vielmehr ist es beim Vorhandensein eines geringen Spiels 21 möglich, beim darauffolgenden Umspritzen mit PUR (d.h. der Einbettung) Toleranzen auszugleichen.

Fig. 4b zeigt schematisch eine weitere Steckverbindung 17b zur Befestigung des Anströmschutzes 10b an der unteren Endscheibe 15, bei welcher Rastzapfen 16b mit Widerhaken am unteren Ende des Anströmschutzes 10b ausgebildet sind. Die weitere Steckverbindung 17b zeichnet sich durch einen Gegenhalter 22 aus, der, wie auch das Filtermedium 13, einseitig in die weitere Endscheibe 15 eingebettet ist. Die gegenüberliegende Seite des Gegenhalters 22 ragt aus der Endscheibe 15 hervor und weist Öffnungen zur Aufnahme der Rastzapfen 16b auf. Wie in Fig. 4b ebenfalls zu erkennen ist, ist der Anströmschutz 10b von dem Filtermedium 13 beabstandet, wobei der Abstand typischerweise im mm-Bereich liegt.

In Fig. 4c ist eine weitere Steckverbindung 17c dargestellt, bei der die Rastzapfen 16c keine Widerhaken aufweisen und in dem Gegenhalter 22 verschiebbar gelagert sind. Auf diese Weise wird ein Toleranzausgleich des Anströmschutzes 10c in Längsrichtung erreicht.

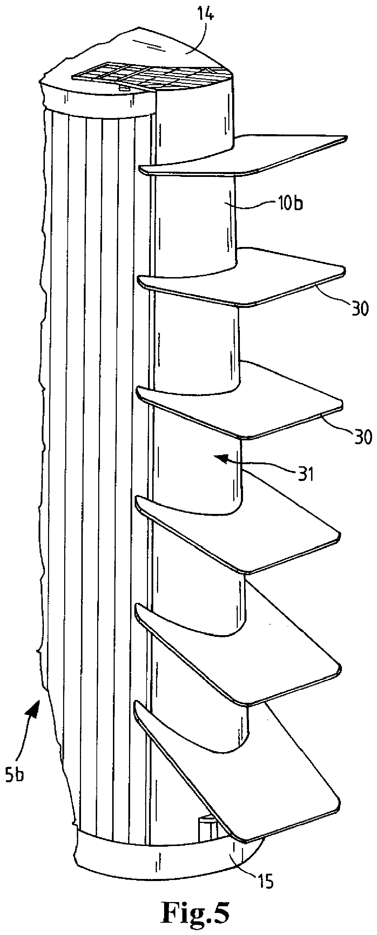

Figur 5 zeigt eine Ausführungsform eines Anströmschutzes 10b mit einem angedeuteten Filterelement 5b. In dieser Ausführungsform weist der Anströmschutz 10b auf der dem Filterelement abgewandten Seite 31 eine oder mehrere Leitrippen 30 insbesondere zur Strömungsführung im Anströmbereich auf. Die Leitrippen 30 liegen insbesondere in Ebenen, die im Wesentlichen parallel zu den Endscheiben (14, 15) des Filterelements liegen (s. Fig. 2), können jedoch je nach Anströmbedingung in Richtung des Filterelements 5b fächerförmig angeordnet sein, um eine gleichmäßigere Anströmung des Filterelements zu ermöglichen. Die Öffnung der Fächerform kann dabei entweder dem Filterelement zugewandt oder von diesem abgewandt sein.

## Patentansprüche

1. Filterelement (5a,5b) für ein Lufteinlasssystem (1), insbesondere Ansaugluftfilterelement für Brennkraftmaschinen, umfassend: ein Filtermedium (13), insbesondere in Form eines Faltenbalgs, zum Reinigen von Rohluft, sowie ein Mittelrohr (20) zur Stützung des Filtermediums (13), und einen Anströmschutz (10a;10b;10c) zur Strömungsumlenkung in einem Anströmbereich (9) des Filtermediums (13), sowie eine Endscheibe (14), **dadurch gekennzeichnet, dass** der Anströmschutz (10a; 10b; 10c) sowie bevorzugt das Mittelrohr (20) und das Filtermedium (13) einenends in die Endscheibe (20) eingebettet sind.

2. Filterelement (5a; 5b) nach Anspruch 1, **dadurch gekennzeichnet, dass** der Anströmschutz (10a; 10b; 10c) einenends über eine Steckverbindung (19) an dem Mittelrohr (20) befestigt ist.

3. Filterelement nach Anspruch 1 oder 2, **dadurch gekennzeichnet, dass** der Anströmschutz (10a; 10b; 10c) anderenends an einer weiteren Endscheibe (15) des Filterelements (5a; 5b) befestigt ist.

4. Filterelement (5a; 5b) nach Anspruch 3, **dadurch gekennzeichnet, dass** der Anströmschutz (10a; 10b; 10c) über eine weitere Steckverbindung (17a; 17b; 17c) an der weiteren Endscheibe (15) befestigt ist.

5. Filterelement (5a; 5b) nach Anspruch 4, **dadurch gekennzeichnet, dass** die Steckverbindung (17b; 17c) einen Gegenhalter (22) umfasst, der einenends in die weitere Endscheibe (15) eingebettet ist.

6. Filterelement (5a; 5b) nach einem der Ansprüche 3 oder 4, **dadurch gekennzeichnet, dass** der Anströmschutz (10a; 10b; 10c) anderenends in die weitere Endscheibe (15) eingebettet ist.

7. Filterelement (5a; 5b) nach einem der vorhergehenden Ansprüche, **dadurch gekennzeichnet, dass** die Endscheibe (14,15) aus PUR gebildet ist.

8. Filterelement (5a; 5b) nach einem der vorhergehenden Ansprüche, **dadurch gekennzeichnet, dass** der Anströmschutz (10a; 10b; 10c), insbesondere in dem Anströmbereich (9), luftundurchlässig ausgebildet ist.

9. Filterelement (5a; 5b) nach einem der vorhergehenden Ansprüche, **dadurch gekennzeichnet, dass** sich der Anströmschutz (10a; 10b; 10c) über die gesamte Länge des Filtermediums (13) erstreckt.

10. Filterelement (5a; 5b) nach einem der vorhergehenden Ansprüche, **dadurch gekennzeichnet, dass** der Anströmschutz (10a; 10b; 10c) eine an die Form des Filtermediums (13) angepasste Geometrie aufweist.

11. Filterelement (5a; 5b) nach einem der vorhergehenden Ansprüche, **dadurch gekennzeichnet, dass** der Anströmschutz (10a; 10b; 10c) zumindest in einem Teilbereich vom Filtermedium (13) beabstandet ist.

12. Lufteinlasssystem (1) umfassend: ein Gehäuse (6) mit einem Rohlufteinlass (2) und einem Reinluftauslass (3), wobei in dem Gehäuse (6) zwischen dem Rohlufteinlass (2) und dem Reinluftauslass (3) ein Filterelement (5a; 5b) nach einem der vorhergehenden Ansprüche angeordnet ist.

13. Lufteinlasssystem (1) nach Anspruch 12, **dadurch gekennzeichnet, dass** der Anströmschutz (10a; 10b; 10c) anderenends an dem Gehäuse (6) des Lufteinlasssystems (1) gelagert ist.

14. Lufteinlasssystem (1) nach einem der vorhergehenden Ansprüche, **dadurch gekennzeichnet, dass** sich der Anströmschutz (10a; 10b; 10c) zumindest teilweise über einen Anströmbereich (9) des Filterelements (5a; 5b) in dem Gehäuse (6) erstreckt.

## Claims

1. Filter element (5a; 5b) for an air intake system (1), in particular an intake air filter element for internal combustion engines, comprising: a filter medium (13), in particular in the shape of a bellows, for cleaning raw air, as well as a central tube (20) for supporting the filter medium (13), and an inflow protection (10a; 10b; 10c) for flow deflection in an inflow section (9) of the filter medium (13), as well as an end disk (14), **characterized in that** the inflow protection (10a;10b;10c) as well as preferably the central tube (20) and the filter medium (13) are embedded at one end into the end disk (20).

2. Filter element (5a; 5b) according to claim 1, **characterized in that** the inflow protection (10a; 10b; 10c) is attached at one end to the central tube (20) via a plug-in joint (19).

3. Filter element according to claim 1 or 2, **characterized in that** the inflow protection (10a; 10b; 10c) is attached at the other end to another end disk (15) of the filter element (5a; 5b).

4. Filter element (5a; 5b) according to claim 3, **characterized in that** the inflow protection (10a; 10b; 10c) is attached by means of another plug-in joint (17a; 17b; 17c) to the other end disk (15).

5. Filter element (5a; 5b) according to claim 4, **characterized in that** the plug-in joint (17b; 17c) comprises a counterholder (22) which is embedded at one end into the other end disk (15).

6. Filter element (5a; 5b) according to one of the claims 3 or 4, **characterized in that** the inflow protection (10a; 10b; 10c) is embedded at the other end into the other end disk (15).

7. Filter element (5a; 5b) according to one of the above claims, **characterized in that** the end disk (14, 15) is made of PUR.

8. Filter element (5a; 5b) according to one of the above claims, **characterized in that** the inflow protection (10a; 10b; 10c), in particular in the inflow section (9), is air-impermeable.

9. Filter element (5a; 5b) according to one of the above claims, **characterized in that** the inflow protection (10a; 10b; 10c) extends across the entire length of the filter medium (13).

10. Filter element (5a; 5b) according to one of the above claims, **characterized in that** the inflow protection (10a; 10b; 10c) features a geometry adapted to the shape of the filter medium (13).

11. Filter element (5a; 5b) according to one of the above claims, **characterized in that** the inflow protection (10a; 10b; 10c) is spaced apart from the filter medium (13) at least in a section.

12. Air intake system (1) comprising: a housing (6) with a raw air intake (2) and a clean air outlet (3), wherein a filter element (5a; 5b) according to one of the above claims is disposed in the housing (6) between the raw air intake (2) and the clean air outlet (3).

13. Air intake system (1) according to claim 12, **characterized in that** the inflow protection (10a; 10b; 10c) is attached at the other end to the housing (6) of the air intake system (1).

14. Air intake system (1) according to one of the above claims, **characterized in that** the inflow protection (10a; 10b; 10c) extends at least partially across an inflow section (9) of the filter element (5a; 5b;) in the housing (6).

## Revendications

1. Élément filtrant (5a ; 5b) pour un système d'admission d'air (1), en particulier élément filtrant d'air aspiré pour des moteurs à combustion interne, comprenant: un milieu filtrant (13), en particulier en forme de soufflet, destiné à purifier de l'air brut, et un tube central (20) destiné à soutenir le milieu filtrant (13), et une protection d'afflux (10a ; 10b ;10c) destinée à dévier le flux dans une zone d'afflux (9) du milieu filtrant (13), ainsi qu'un disque d'extrémité (14), **caractérisé en ce que** la protection d'afflux (10a ; 10b ; 10c) et de préférence le tube central (20) et le milieu filtrant (13) sont incorporés à une extrémité dans le disque d'extrémité (20).

2. Élément filtrant (5a ; 5b) selon la revendication 1, **caractérisé en ce que** la protection d'afflux (10a; 10b; 10c) est fixée à une extrémité au tube central (20) au moyen d'un raccord enfichable (19).

3. Élément filtrant selon la revendication 1 ou 2, **caractérisé en ce que** la protection d'afflux (10a ; 10b ; 10c) est fixée à l'autre extrémité à un autre disque d'extrémité (15) de l'élément filtrant (5a ; 5b).

4. Élément filtrant (5a ; 5b) selon la revendication 3, **caractérisé en ce que** la protection d'afflux (10a; 10b; 10c) est fixée au moyen d'un autre raccord enfichable (17a ; 17b ; 17c) à l'autre disque d'extrémité (15).

5. Élément filtrant (5a ; 5b) selon la revendication 4, **caractérisé en ce que** le raccord enfichable (17b ; 17c) comprend un contre-appui (22) qui est incorporé à une extrémité dans l'autre disque d'extrémité (15).

6. Élément filtrant (5a ; 5b) selon l'une des revendications 3 ou 4, **caractérisé en ce que** la protection d'afflux (10a ; 10b ; 10c) est incorporée à l'autre extrémité dans l'autre disque d'extrémité (15).

7. Élément filtrant (5a ; 5b) selon l'une des revendications précédentes, **caractérisé en ce que** le disque d'extrémité (14, 15) est exécuté en PUR.

8. Élément filtrant (5a ; 5b) selon l'une des revendications précédentes, **caractérisé en ce que** la protection d'afflux (10a ; 10b ; 10c), est exécutée de façon hermétique à l'air, en particulier dans la zone d'afflux (9).

9. Élément filtrant (5a ; 5b) selon l'une des revendications précédentes, **caractérisé en ce que** la protection d'afflux (10a ; 10b ; 10c) s'étend sur toute la longueur du milieu filtrant (13).

10. Élément filtrant (5a ; 5b) selon l'une des revendications précédentes, **caractérisé en ce que** la protection d'afflux (10a ; 10b ; 10c) a une géométrie adaptée à la forme du milieu filtrant (13).

11. Élément filtrant (5a; 5b) selon l'une des revendications précédentes, **caractérisé en ce que** la protection d'afflux (10a ; 10b ; 10c) est espacée, au moins dans une section, du milieu filtrant (13).

12. Système d'admission d'air (1) comprenant : un boîtier (6) avec une entrée d'air brut (2) et une sortie d'air pur (3), un élément filtrant (5a ; 5b) selon l'une des revendications précédentes étant disposé dans le boîtier (6) entre l'entrée d'air brut (2) et la sortie d'air pur (3).

13. Système d'admission d'air (1) selon la revendication 12, **caractérisé en ce que** la protection d'afflux (10a ; 10b ; 10c) est logée à l'autre extrémité sur le boîtier (6) du système d'admission d'air (1).

14. Système d'admission d'air (1) selon l'une des revendications précédentes, **caractérisé en ce que** la protection d'afflux (10a ; 10b ; 10c) s'étend au moins en partie au-dessus d'une zone d'afflux (9) de l'élément filtrant (5a ; 5b) dans le boîtier (6).
